(19) Europäisches Patentamt / European Patent Office / Office européen des brevets

(11) **EP 3 507 913 B1**

(12) **EUROPEAN PATENT SPECIFICATION**

(45) Date of publication and mention
of the grant of the patent:
**11.03.2026 Bulletin 2026/11**

(21) Application number: **17852348.6**

(22) Date of filing: **19.09.2017**

(51) International Patent Classification (IPC):
*H04B 1/707* (2011.01)    *H04J 13/00* (2011.01)
*H04L 27/34* (2006.01)    *H04L 1/00* (2006.01)

(52) Cooperative Patent Classification (CPC):
**H04B 1/707; H04J 13/00; H04L 1/00; H04L 1/0041;
H04L 1/0071; H04L 27/3411**

(86) International application number:
**PCT/CN2017/102226**

(87) International publication number:
**WO 2018/054280 (29.03.2018 Gazette 2018/13)**

(54) **METHODS FOR MULTIPLE ACCESS TRANSMISSION**

VERFAHREN FÜR MEHRFACHZUGANGSÜBERTRAGUNG

PROCÉDÉS DE TRANSMISSION À ACCÈS MULTIPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2016 US 201662397682 P
08.09.2017 US 201715699367**

(43) Date of publication of application:
**10.07.2019 Bulletin 2019/28**

(73) Proprietor: **Huawei Technologies Co., Ltd.
Longgang District
Shenzhen, Guangdong 518129 (CN)**

(72) Inventors:
• **BAYESTEH, Alireza**
**Ottawa, Ontario K2K 1L8 (CA)**
• **MA, Jianglei**
**Ottawa, Ontario K2M 2W5 (CA)**

(74) Representative: **Thun, Clemens
Mitscherlich PartmbB
Karlstraße 7
80333 München (DE)**

(56) References cited:
CN-A- 104 660 390      CN-A- 105 721 106
US-A1- 2009 022 234    US-A1- 2010 246 641
US-A1- 2014 140 360

• BAUMGARTNER B ET AL: "Multicarrier Spread
Spectrum: A Coding Perspective", SPREAD
SPECTRUM TECHNIQUES AND APPLICATIONS,
2004 IEEE EIGHTH INTERNAT IONAL
SYMPOSIUM ON SYDNEY, AUSTRALIA 30
AUG.-2 SEPT. 2004, PISCATAWAY, NJ, USA,IEEE,
30 August 2004 (2004-08-30), pages 61 - 66,
XP010754909, ISBN: 978-0-7803-8408-8, DOI:
10.1109/ISSSTA.2004.1371664
• REZA HOSHYAR ET AL: "LDS-OFDM an Efficient
Multiple Access Technique", 2010 IEEE 71ST
VEHICULAR TECHNOLOGY CONFERENCE, 1
January 2010 (2010-01-01), pages 1 - 5,
XP055206817, ISBN: 978-1-42-442518-1, DOI:
10.1109/VETECS.2010.5493941
• WANG SEN-HUNG ET AL: "Novel MC-CDMA
system using fourier duals of sparse perfect
Gaussian integer sequences", 2016 IEEE
INTERNATIONAL CONFERENCE ON
COMMUNICATIONS (ICC), IEEE, 22 May 2016
(2016-05-22), pages 1 - 6, XP032922342, DOI:
10.1109/ICC.2016.7511167

# Description

## Field

The present disclosure relates generally to communication systems that utilize multiple access (MA) techniques.

## Background

Multiple access (MA) techniques permit signals being transmitted to multiple user equipment (UEs), or received from multiple UEs, to simultaneously share a transmission resource.

New MA techniques are an active topic for standardization for the next generation of telecommunication technology. There are many proposed MA schemes, with relative benefits and drawbacks in different communication scenarios.

US 2009/0022234 A1 refers to a method of transmitting more than one signal in a wireless communication system. The method comprises allocating multiple symbols to a first signal constellation and a second signal constellation, wherein the first signal constellation refers to base layer signals and the second signal constellation refers to enhancement layer signals; modulating the multiple symbols of the first signal constellation and the second signal constellation; and transmitting the modulated symbols, wherein configuration information used for modulating the multiple symbols is provided in a control message.

## Summary

This above mentioned problem is solved by the subject matter of the independent claims. Further implemenation forms are provided in the dependent claims.

## Brief Description of the Drawings

Examples of embodiments of the application will now be described in greater detail with reference to the accompanying drawings.

FIG. 1 is a block diagram illustrating a wireless network for communicating data.

FIG. 2A is a block diagram illustrating an example Electronic Device (ED) structure according to FIG. 1.

FIG. 2B is a block diagram illustrating an example base station structure according to FIG. 1.

FIG. 3 is a block diagram illustrating an example of an apparatus that could be used in implementing a non-orthogonal multiple access (NoMA) scheme.

FIG. 4A is a schematic diagram showing an example framework that may be used to generate a variety of multiple access (MA) schemes according to aspects of the application.

FIG. 4B is a schematic diagram showing another example framework that may be used to generate a variety of MA schemes according to aspects of the application.

FIG. 5 is a schematic diagram showing an example MA scheme derived from the framework according to an aspect of the application.

FIG. 6 is a schematic diagram showing another example MA scheme derived from the framework according to an aspect of the application.

FIG. 7 is a schematic diagram showing another example MA scheme derived from the framework according to an aspect of the application.

FIG. 8 is a schematic diagram showing another example MA scheme derived from the framework according to an aspect of the application.

FIG. 9 is a schematic diagram showing an example MA scheme derived from the framework according to an aspect of the application.

FIG. 10 is a schematic diagram showing an example MA scheme derived from the framework according to an aspect of the application.

FIG. 11 is a schematic diagram showing an example MA scheme derived from the framework according to an aspect of the application.

FIG. 12 is a schematic diagram showing an example of relabeling a 16QAM constellation according to an aspect of the application.

FIG. 13 is a schematic diagram showing another example of remapping 16QAM constellation according to an aspect of the application.

FIG. 14 is a flow diagram of an example method according to an embodiment of the application.

FIG. 15 is a flow diagram of an example method according to an embodiment of the application.

FIG. 16 is a block diagram of an example user equipment (UE) for transmitting a MA signal according to an aspect of the application.

FIG. 17 is a block diagram of an example network side receiver for transmitting a MA signal according to an aspect of the application.

FIG. 18 is a block diagram of an example apparatus for receiving a MA signal according to an aspect of the application.

## Detailed Description

It should be understood at the outset that although illustrative implementations of one or more embodiments of the present disclosure are provided below, the disclosed systems and/or methods may be implemented using any number of techniques. The disclosure should in no way be limited to the illustrative implementations, drawings, and techniques illustrated below, including the designs and implementations illustrated and described herein, but may be modified within the scope of the appended claims along with their full scope of equivalents.

Multiple access (MA) techniques generally allow multiple signals to be transmitted from one or more transmitters to one or more receivers simultaneously on a given shared resource. The shared resource may include a time resource, a frequency resource, a space resource or some combination thereof. In a downlink (DL) scenario, a network side device such as a transmit receive point (TRP), also sometimes known as a transmit point (TP), a receive point (RP), an evolved Node B (eNode B or eNB), or an access point, can transmit to multiple separate user equipment (UE). The term "UE" refers to any component (or collection of components) capable of establishing a wireless connection with a network side device, such as a mobile station (STA) or other wirelessly enabled devices. In an uplink (UL) scenario, multiple UEs can transmit to a network side receiver.

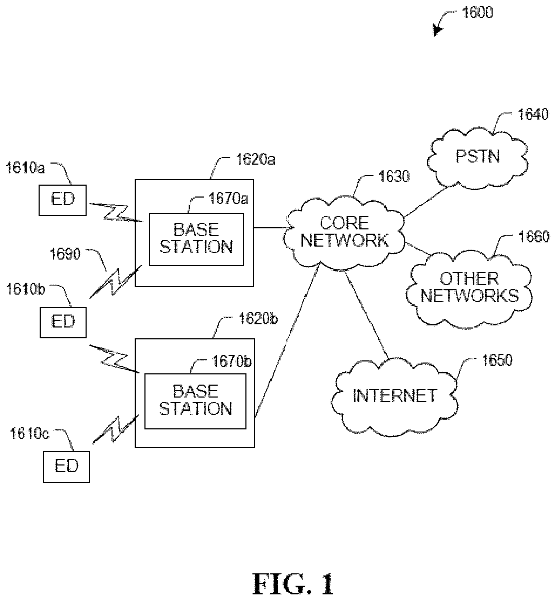

FIG. 1 illustrates an example communication system 1600. In general, the system 1600 enables multiple wireless or wired users to transmit and receive data and other content. The system 1600 may implement one or more channel access methods, such as code division multiple access (CDMA), time division multiple access (TDMA), frequency division multiple access (FDMA), orthogonal FDMA (OFDMA), or single-carrier FDMA (SC-FDMA).

In this example, the communication system 100 includes electronic devices (ED) 1610a-1610c, radio access networks (RANs) 1620a-1620b, a core network 1630, a public switched telephone network (PSTN) 1640, the Internet 1650, and other networks 1660. While certain numbers of these components or elements are shown in FIG. 1, any number of these components or elements may be included in the system 1600.

The EDs 1610a-1610c are configured to operate and/or communicate in the system 1600. For example, the EDs 1610a-1610c are configured to transmit and/or receive via wireless or wired communication channels. Each ED 1610a-1610c represents any suitable end user device and may include such devices (or may be referred to) as a user equipment/device (UE), wireless transmit/receive unit (WTRU), mobile station, fixed or mobile subscriber unit, cellular telephone, personal digital assistant (PDA), smartphone, laptop, computer, touchpad, wireless sensor, or consumer electronics device.

The RANs 1620a-1620b here include base stations 1670a-1670b, respectively. Each base station 1670a-1670b is configured to wirelessly interface with one or more of the EDs 1610a-1610c (which may also be referred to as UEs 1610a to 1610c herein) to enable access to the core network 1630, the PSTN 1640, the Internet 1650, and/or the other networks 1660. For example, the base stations 1670a-1670b may include (or be) one or more of several well-known devices, such as a base transceiver station (BTS), a Node-B (NodeB), an evolved NodeB (eNodeB), a Home NodeB, a Home eNodeB, a site controller, an access point (AP), or a wireless router. The EDs 1610a-1610c are configured to interface and communicate with the internet 1650 and may access the core network 1630, the PSTN 1640, and/or the other networks 1660.

In the embodiment shown in FIG. 1, the base station 1670a forms part of the RAN 1620a, which may include other base stations, elements, and/or devices. Also, the base station 1670b forms part of the RAN 1620b, which may include other base stations, elements, and/or devices. Each base station 1670a-1670b operates to transmit and/or receive wireless signals within a particular geographic region or area, sometimes referred to as a "cell." In some embodiments, multiple-input multiple-output (MIMO) technology may be employed having multiple transceivers for each cell.

The base stations 1670a-1670b communicate with one or more of the EDs 1610a-1610c over one or more air interfaces 1690 using wireless communication links. The air interfaces 1690 may utilize any suitable radio access technology.

It is contemplated that the system 1600 may use multiple channel access functionality, including such schemes as described above. In particular embodiments, the base stations and EDs implement LTE, LTE-A, LTE-B, and/or other 4th Generation or 5th Generation (e.g. New Radio) Radio Access Technologies and wireless protocols. Of course, other multiple access schemes, RATs and/or wireless protocols may be utilized.

The RANs 1620a-1620b are in communication with the core network 1630 to provide the EDs 1610a-1610c with voice, data, application, Voice over Internet Protocol (VoIP), or other services. Understandably, the RANs 1620a-1620b and/or the core network 1630 may be in direct or indirect communication with one or more other RANs (not shown). The core network 130 may also serve as a gateway access for other networks (such as the PSTN 1640, the Internet 1650, and the other networks 1660). In addition, some or all of the EDs 1610a-1610c may include functionality for communicating with different wireless networks over different wireless links using different wireless technologies and/or protocols. Instead of wireless communication (or in addition thereto), the EDs may communicate via wired communication channels to a service provider or switch (not shown), and to the internet 1650.

Although FIG. 1 illustrates one example of a communication system, various changes may be made to FIG. 1. For example, the communication system 1600 could include any number of EDs, base stations, networks, or other components in any suitable configuration.

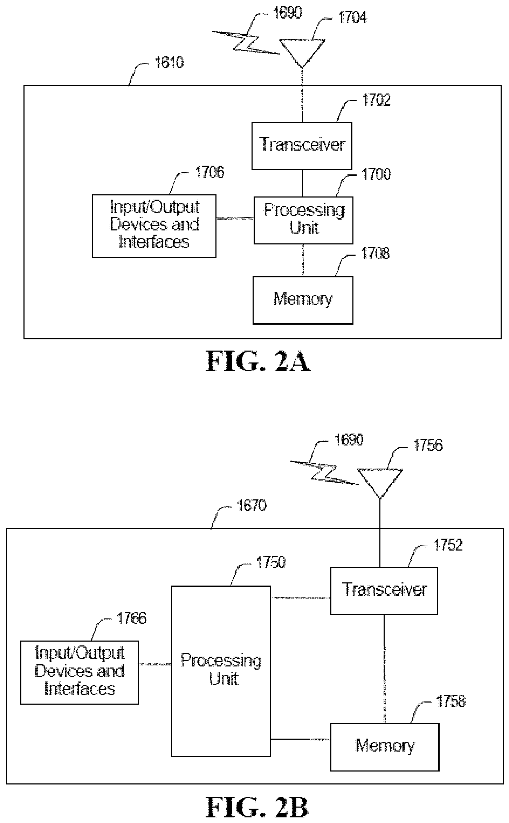

FIGs. 2A and 2B illustrate example devices that may implement the methods and teachings according to this disclosure. In particular, FIG. 2A illustrates an example ED 1610, and FIG. 2B illustrates an example base station 1670. These components could be used in the system 100 or in any other suitable system.

As shown in FIG. 2A, the ED 1610 includes at least one processing unit 1700. The processing unit 1700 implements various processing operations of the ED 1610. For example, the processing unit 1700 could perform signal coding, data processing, power control, input/output processing, or any other functionality enabling the ED 1610 to operate in the system 1600. The processing unit 1700 also supports the methods and teachings described in more detail above. Each processing unit 1700 includes any suitable processing or computing device configured to perform one or more operations. Each processing unit 1700 could, for example, include a microprocessor, microcontroller, digital signal processor, field programmable gate array, or application specific integrated circuit. While only a single processing unit is shown in FIG. 2A, there could be multiple processing units within ED 1610 performing the above described operations.

The ED 1610 also includes at least one transceiver 1702. The transceiver 1702 is configured to modulate data or other content for transmission by at least one antenna or NIC (Network Interface Controller) 1704. The transceiver 1702 is also configured to demodulate data or other content received by the at least one antenna 1704. Each transceiver 1702 includes any suitable structure for generating signals for wireless or wired transmission and/or processing signals received wirelessly or by wire. Each antenna 1704 includes any suitable structure for transmitting and/or receiving wireless or wired signals. One or multiple transceivers 1702 could be used in the ED 1610, and one or multiple antennas 1704 could be used in the ED 1610. Although shown as a single functional unit, a transceiver 1702 could also be implemented using at least one transmitter and at least one separate receiver.

The ED 1610 further includes one or more input/output devices 1706 or interfaces (such as a wired interface to the internet 1650). The input/output devices 1706 facilitate interaction with a user or other devices (network communications) in the network. Each input/output device 1706 includes any suitable structure for providing information to or receiving/providing information from a user, such as a speaker, microphone, keypad, keyboard, display, or touch screen, including network interface communications.

In addition, the ED 1610 includes at least one memory 1708. The memory 1708 stores instructions and data used, generated, or collected by the ED 1610. For example, the memory 1708 could store software or firmware instructions executed by the processing unit(s) 1700 and data used to reduce or eliminate interference in incoming signals. Each memory 1708 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIG. 2B, the base station 1670 includes at least one processing unit 1750, at least one transceiver 1752, which includes functionality for a transmitter and a receiver, one or more antennas 1756, at least one memory 1758, and one or more input/output devices or interfaces 1766. A scheduler 1753, which would be understood by one skilled in the art, is coupled to the processing unit 1750. The scheduler 1753 could be included within or operated separately from the base station 1670. The processing unit 1750 implements various processing operations of the base station 1670, such as signal coding, data processing, power control, input/output processing, or any other functionality. The processing unit 1750 can also support the methods and teachings described in more detail above. Each processing unit 1750 includes any suitable processing or computing device configured to perform one or more operations. Each processing unit 1750 could, for example, include a microprocessor, microcontroller, digital signal processor, field programmable gate array, or application specific integrated circuit.

Each transceiver 1752 includes any suitable structure for generating signals for wireless or wired transmission to one or more EDs or other devices. Each transceiver 1752 further includes any suitable structure for processing signals received wirelessly or by wire from one or more EDs or other devices. Although shown combined as a transceiver 1752, a transmitter and a receiver could be separate components. Each antenna 1756 includes any suitable structure for transmitting and/or receiving wireless or wired signals. While a common antenna 1756 is shown here as being coupled to the transceiver 1752, one or more antennas 1756 could be coupled to the transceiver(s) 1752, allowing separate antennas 1756 to be coupled to the transmitter and the receiver if equipped as separate components. Each memory 1758 includes any suitable volatile and/or non-volatile storage and retrieval device(s). Each input/output device 1766 facilitates interaction with a user or other devices (network communications) in the network. Each input/output device 1766 includes any suitable structure for providing information to or receiving/providing information from a user, including network interface communications.

In some embodiments, the EDs 1610, 1670 may each include only a subset of the components shown in FIGs 2A and 2B to perform the operations described herein. For example, the EDs 1610, 1670 may only include a processing unit 1700, 1750 or a processing unit 1700, 1750 coupled with a memory 1708, 1758. In those embodiments, EDs 1610, 1670 may also include an interface or communication module to enable wireless communications with other devices in the network. Although not shown, the interface or communication module could include a modulator, an amplifier, antenna and/or other modules or components of a transmit chain or alternatively could be configured to interface with a separate (Radio-Frequency - RF) communication module. For example, either or both of the processing unit 1700, 1750 and memory 1708, 1758 of the EDs 1610, 1670 may be implemented in hardware or circuitry (e.g. in one or more chipsets, microprocessors, application-specific integrated circuits (ASIC), field-programmable gate arrays (FPGAs), dedicated logic circuitry, or combinations thereof) so as to produce Multiple Access (MA) signals as described herein for transmission by a separate (RF) unit.

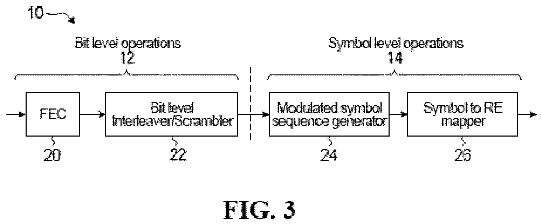

Embodiments disclosed herein could be applied in multiple access scenarios, including but not in any way limited to non-orthogonal multiple access (NoMA), for example. FIG. 3 is a block diagram illustrating an example of an apparatus that could be used in implementing a NoMA scheme.

FIG. 3 illustrates an example of an apparatus 10 implementing a collection of signal processing operations that may be part of a framework for generating a NoMA signal, which includes units to function as a FEC encoder 20, a bit-level interleaver/scrambler 22, a modulated symbol sequence generator 24, and a symbol to RE mapper 26. Bit-level operations and symbol-level operations are also labelled at 12, 14, respectively, in FIG. 3.

A stream of information bits is provided to the FEC encoder 20 to perform forward error correction (FEC) encoding. The information bits are processed with a FEC channel code, which could be a low density parity check (LDPC) code, a Turbo code, a polar code, or another type of code. In one embodiment, a block of K information bits is encoded and N > K coded bits are generated.

The encoded bits are then provided to bit-level interleaver/scrambler 22 for bit-level interleaving/scrambling. In the bit-level interleaver/scrambler 22, the coded bits are interleaved and/or scrambled, and interleaved/-scrambled bits are generated. The bit-level interleaver/-scrambler 22 could be user- (or receiver) specific, such that each user or receiver is associated with a specific interleaver/scrambler sequence or scheme, or is associated with a cell-specific interleaver/scrambler sequence, such that a specific interleaver/scrambler sequence or scheme is applied for receivers in each cell or service area in a network.

An output of coded bits from the bit-level interleaver/scrambler 22 is provided to the modulated symbol level sequence generator 24. The modulated symbol level sequence generator 24 generates symbols from the coded bits. In the modulated symbol sequence generator 24, the interleaved/scrambled bits are mapped to modulated symbols, with or without additional symbol-level spreading operations. The bit-to-symbol mapping could be one or multiple bits to one or multiple symbols. Symbol-level spreading could involve multiplying the symbols with spreading codes, which may include one or multiple stages, and the length of spreading code could be different at each stage.

Although not specifically shown in FIG. 3, an output of the modulated symbol level sequence generator 24 could be provided to a symbol sequence precoder that performs symbol precoding. Such precoding could be intended to reduce the peak to average power ratio (PAPR) of a transmitted signal, which may improve coverage of the transmitted signal. In the case of an OFDM waveform, discrete Fourier transform (DFT) precoding might be used.

A symbol sequence, which may have been precoded in some embodiments, is provided to the symbol to resource element (RE) mapper 26. The modulation symbols are mapped to resource elements for transmission, with or without additional symbol-level interleaving/-scrambling. A symbol-level interleaver/scrambler could be user-specific, such that each user has a specific symbol-level interleaver/scrambler sequence or scheme, or cell-specific, with a specific symbol-level interleaver/scrambler sequence or scheme being applied for the receiver in each cell or coverage area of a network. In some embodiments, a symbol sequence precoder can also be used after the symbol to resource element (RE) mapper.

Other operations or features could also be implemented. For example, a waveform modulator could be implemented to generate, after the symbols have been mapped the REs, the actual signal to be transmitted over the air.

According to the framework illustrated in FIG. 3, information bits are first encoded using a FEC encoder, and bit-level interleaving/scrambling is applied to coded bits which can be cell-specific, UE-specific, or in general layer-specific, in the case that MA signal transmitted from a UE contains multiple layers. These are bit-level operations. UE-specific, or more generally layer-specific, symbol-level operations including modulated symbol sequence generation and symbol-to RE mapping are applied. Such a framework may assist a receiver in decoding signals of multiplexed receivers more efficiently.

FIG. 3 is intended solely as an illustrative example of a multiple access scenario in which disclosed embodiments could be applied. Embodiments disclosed herein could be used, for example, to implement modulated symbol sequence generation at 24 in FIG. 3.

NoMA generally allows multiple signals to be transmitted from one or more transmitters to one or more receivers simultaneously on a given shared resource. The shared resource may include a time resource, a frequency resource, a space resource or some combination thereof. In a downlink (DL) scenario, a network side device can transmit to multiple separate user equipment (UE). In an uplink (UL) scenario multiple UEs can transmit to a network side receiver.

In the UL NoMA scenario, the UEs process information bits arranged in one or more layers to become symbols for transmission on multiple tones. In NoMA, there are likely to be collisions of symbols from the multiple UEs at the receiver that receives the signals. A NoMA technique may attempt to distinguish the transmitted signals from the multiple UEs by applying some UE specific (and/or user-specific) or layer-specific features that are unique to the UE or layer, respectively.

Distinct multiple access schemes can be developed based on such UE-specific (and/or user-specific) or layer specific (or both) features or signal processing operations. These signal processing operations may include, but are not limited to: FEC, bit-level interleaving/scrambling; modulated symbol sequence generator; and symbol to RE mapping.

A framework is proposed for generating a MA signal based on selection of a particular set of signal processing operations. A core group of signal processing operations includes modulation, a spreading matrix, and a symbol to resource element (RE) mapping. There may be additional signal processing operations that are performed, such as, but not limited to, phase or power adjustment operations, separating real and imaginary portions, and first constellation to second constellation mapping. Various MA schemes that each includes a different subset of the signal processing operations can be derived using the framework. Such a framework can be used by a transmitter that is configured to use MA to select a MA scheme having a set of signal processing operations that meets a desired performance criterion.

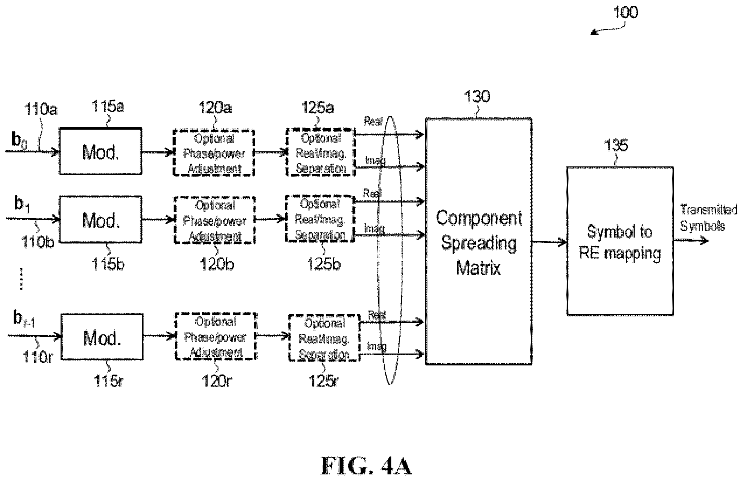

FIG. 4A illustrates an example of signal processing operations that may be part of a framework 100 for generating a MA signal. A bit stream comprising bits $b_0$, $b_1$,...$b_{r-1}$ for transmission as a MA signal is divided to form multiple sub-streams 110a, 110b,..., 110r. Although three sub-streams are shown, it is to be understood that the number of sub-streams can be greater or less than three. Each sub-stream 110a, 110b, 110r is input to a respective modulator 115a, 115b,..., 115r. The modulators may be baseline modulators, including Quadrature Amplitude Modulation (QAM), with baseline labeling, such as Gray labeling. The modulation performed by the modulators 115a, 115b,..., 115r can be different for the different sub-streams 110a, 110b,..., 110r.

Shown in FIG. 4A are several additional optional processing blocks indicated by dashed lines. The optional processing blocks in FIG. 4A include power and/or phase adjustment processing blocks 120a, 120b,..., 120r and real/imaginary separation processing blocks 125a, 125b,..., 125r. The power and/or phase adjustment processing blocks 120a, 120b,..., 120r allow the phase or power of the output of a respective modulator to be adjusted. In some embodiments, operations performed by the power and/or phase processing block can be incorporated into the component spreading matrix such that all of the operations are performed by a single matrix multiplication. The real/imaginary separation processing blocks 125a, 125b,..., 125r allow the output of a respective modulator to be resolved into a real portion of an output of the processing block and an imaginary portion of the output of the processing block.

The symbols that are output from a respective stream of bits by a corresponding modulator 115a, 115b,...115r, or from a corresponding optional post-modulator signal processing block 120a, 120b,...120r, 125a, 125b,...125r, can be referred to as a component. Spreading can then be applied to each component separately so that the spreading may be considered component-specific spreading which maps each symbol of the particular component to a set of symbols. Therefore, in some embodiments, the spreading operation may be referred to as a mapping operation. When the spreading operation is linear, it can be represented in the framework of FIG. 4A in the form of a component spreading matrix 130. The component spreading matrix can be considered to have n columns and m rows, where n and m can be any integer values. If n=1 and m is ≥1, the matrix may be representative of a vector, or spreading sequence having m elements. Similarly, if m =1 and n is ≥1, the matrix may be representative of a vector or spreading sequence having n elements. One skilled in the art would also understand that the matrix may be considered to be a set of n vectors or spreading sequences, each vector having m elements. The component spreading matrix may also be referred to as simply a spreading matrix. Each of the n columns of the component spreading matrix may represent a set of m elements of a spreading sequence used for spreading/mapping a group of one or more modulated symbols output from a modulator. In some embodiments, the spreading/mapping operation is performed by a multiplication operation. The output of the spreading matrix spreads, or maps, each of the components (each modulated symbol) applied to the spreading matrix into a set or sequence of symbols. The sets or sequences of symbols could be from the same, or different, constellations and have the same, or different, orders.

In some implementations, the component spreading matrix 130 can be defined in such a way that the number of columns corresponds to the number of components. In another implementation, the number of columns can be set as a fixed value and mapped to properties of a transmitted signal, for example the modulation order in the case that all components are generated by the same component. If there are fewer components than the number of columns in the matrix, then some of the columns in the component spreading matrix 130 will be zero. For example, if the modulation order is 4, the number of nonzero columns can be configured to be 2.

In another implementation, the component spreading matrix can be defined based on a given fixed modulation, including but not limited to BPSK and $\pi/2$-BPSK. If the component spreading matrix is defined based on BPSK and/or $\pi/2$-BPSK, the number of columns will be equal to the modulation order.

If real/imaginary separation is not required, i.e. the optional real/imaginary separation processing blocks 125a, 125b,..., 125r are not used, both real and imaginary parts of the components may use a same spreading sequence. In such a case, the component spreading matrix 130 can be simplified to only include one spreading column for each pair of real/imaginary parts.

The output of the component spreading matrix 130 is provided to a symbol to resource element (RE) mapping processing block 135 to construct the MA signal to be transmitted.

The mapping performed by the symbol to RE mapping processing block 135 can be a sparse mapping or a non-sparse mapping, depending on the MA scheme being used. The sparse mapping can be configured to have different sparsity levels.

It should also be noted that the component spreading matrix 130 and/or the signal to RE mapping performed by the signal to RE mapping processing block 135 can be UE-specific or layer-specific, to simplify the decoding of signals received from multiple UEs. The component spreading matrix 130 can be implemented in a manner that is UE-specific by utilizing values in the matrix, i.e. the spreading sequences in a given column, corresponding to a given component, or input stream, that correspond to a particular UE or layer. The RE mapping processing block 135 can be implemented in a manner that is UE-specific by utilizing a particular mapping that correspond to a particular UE or layer.

The component spreading matrix 130 and symbol to RE mapping processing block 135 can be combined resulting in an extended component spreading matrix. Such a combined extended component spreading matrix may also allow for the possibility of applying a cover code as a part of the matrix. A cover code is a sequence of complex numbers. The cover code may be pseudo-random having elements that are selected randomly from a given alphabet or structured way based on some criteria. In some embodiments, the elements of the cover codes have unit amplitude. UE-specific cover codes provide an additional degree of freedom in separation of signals simultaneously transmitted by multiple UEs and thus, provide better reception. In some embodiments, the cover code may be applied to the component specific matrix.

In the example of the extended component spreading matrix, the number of rows in the resulting matrix corresponds to the spreading factor.

The resulting extended component spreading matrix distinguishes different types of MA schemes. The matrix defines the type of MA scheme. The selection of the matrix may be based on at least one of required key parameter indicators (KPI), an application scenario and spectral efficiency (SE) requirements.

In some embodiments, the symbol to RE mapping processing block 135 may utilize a component-specific mapping.

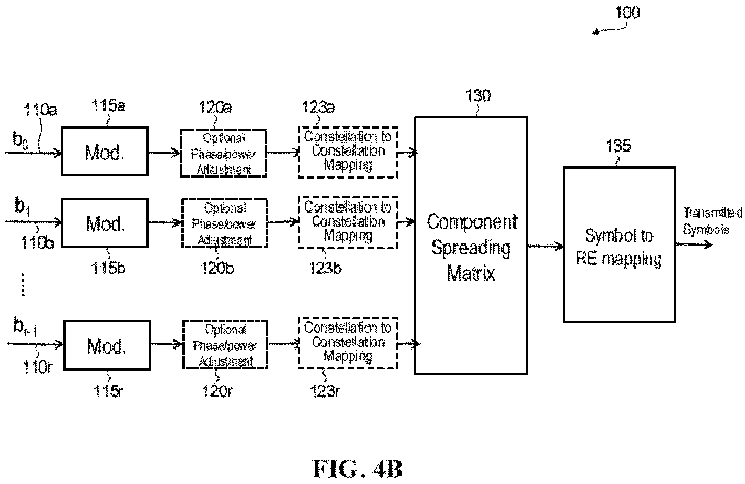

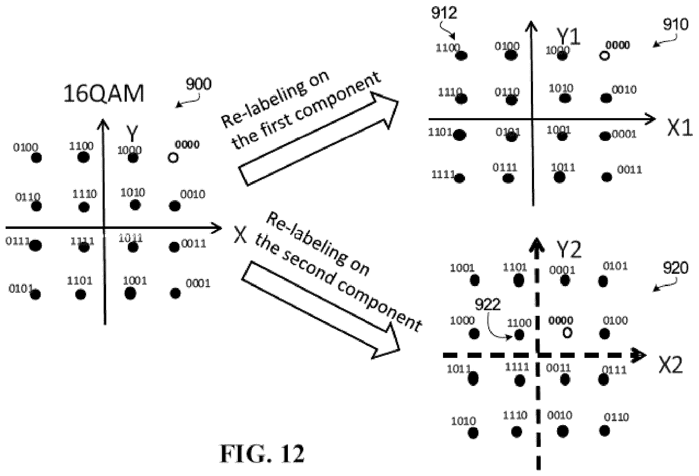

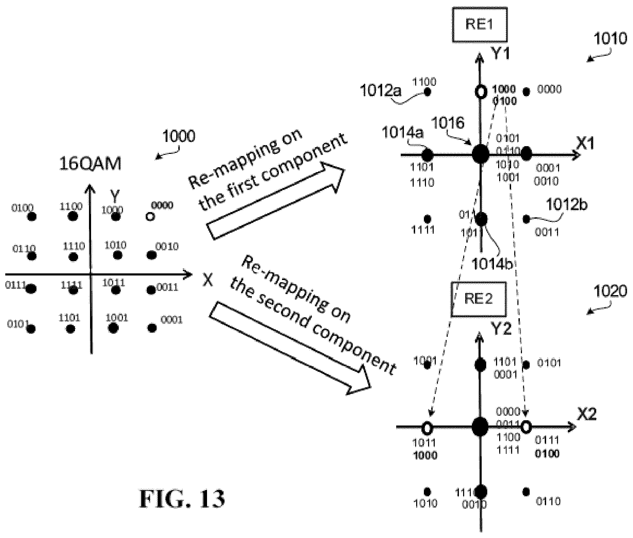

FIG. 4B illustrates a further version of the framework 150 that is similar to FIG. 4A, but with constellation to constellation mapping processing blocks 123a, 123b,..., 123r. Examples of constellation to constellation mapping are provided below with regard to FIGs. 12 and 13. The power/phase adjustment processing blocks 120a, 120b,..., 120r are included in the framework 150, but are still considered to be optional additions to the framework 150. In some embodiments, real/imaginary separation processing blocks, for example as shown in FIG. 4A, may be included prior to the constellation re-mapping processing blocks 123a, 123b,..., 123r.

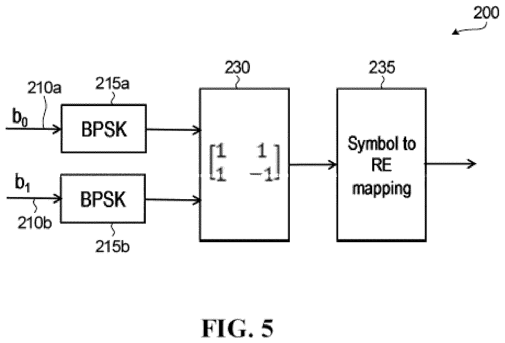

Examples of different combinations resulting from the basic framework of FIG. 4A or FIG. 4B will be described below with reference to FIGs. 5, 6, 7, 8, 9, 10, 11, 12, and 13.

Based on the disclosed framework, proposed MA schemes may be categorized as multi-component spreading or single-component spreading, which is also referred to as linear spreading.

In some implementations, multi-component spreading may include using an arbitrary component spreading matrix, such as found in Sparse Code Multiple Access (SCMA). The multi-component spreading may include a flexible component-specific sparsity level. In some embodiments, multi-component spreading may include using an identity component spreading matrix.

In some implementations, single-component spreading may include using a layer-specific spreading sequence or a layer-specific sparsity pattern, or both. The layer-specific spreading sequence may be defined in a pseudo-random manner in which elements of the sequence are selected randomly from a given alphabet or defined in a structured way based on some criteria.

It is to be understood that not all of the signal processing operations illustrated in FIGs. 4A and 4B would necessarily be needed in a given MA scheme that is developed from the framework. FIGs. 4A and 4B are intended to shown examples of various signal processing operations that are included in the framework. Other signal processing operations are not precluded.

$$\begin{bmatrix} 1 & 1 \\ 1 & -1 \end{bmatrix}$$

FIG. 5 is a first non-claimed example 200 of a particular arrangement of signal processing operations derived from the framework for generating a MA signal. In this first example 200, pairs of bits $b_0$, $b_1$ are separated into two sub-streams 210a, 210b and the individual bits are provided to two separate Binary Phase Shift Keying (BPSK) modulators 215a, 215b. The components output from each BPSK modulator 215a, 215b are multiplied by component spreading matrix 230. The particular component spreading matrix 230 being used to spread the components is:

The number of columns in the matrix, which equals two, equals the number of components, i.e. one from each of the BPSK modulators 215a, 215b. In this case the number of columns also corresponds to the modulation size.

There might be phase adjustment processing blocks in example 200 as well, although not shown.

The output of the component spreading matrix 230 is then provided to the Symbol to RE mapping processing block 235. The example 200 may be used to generate a 4 point, 3 projection constellation. A number of rows may determine a number of non-zero elements in the codebook.

In the case of combining the component spreading matrix 230 with the symbol to RE mapping 235 to generate extended component spreading matrix, it is possible to have a cover code multiplied by the component spreading matrix. The cover code can be pseudo-random or structured with a given alphabet. In some embodiments, the cover code may be applied to the component specific matrix.

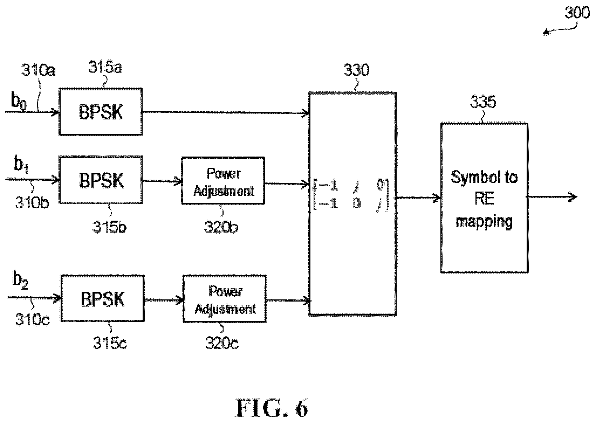

FIG. 6 is another non-claimed example 300 of a particular arrangement of signal processing operations derived from the framework for generating a MA signal. In example 300, a set of bits $b_0$, $b_1$, $b_2$ is separated to form multiple sub-streams 310a, 310b and 310c and each bit is provided to one of three BPSK modulators 315a, 315b, 315c. A component output from each of BPSK modulators 315b and 315c is provided to Power Adjustment blocks 320b and 320c, respectively. The component outputs from BPSK modulator 315a and the two Power Adjustment blocks 320b and 320c are multiplied by component spreading matrix 330. The particular component spreading matrix 330 being used to spread the components is:

$$\begin{bmatrix} -1 & j & 0 \\ -1 & 0 & j \end{bmatrix}$$

In example 300, it is also possible that the power adjust processing blocks are included in the component spreading matrix. In this case, the component spreading matrix becomes:

$$\begin{bmatrix} -1 & \sqrt{2}j & 0 \\ -1 & 0 & \sqrt{2}j \end{bmatrix}$$

Or equivalently:

$$\begin{bmatrix} -\frac{1}{\sqrt{2}} & j & 0 \\ -\frac{1}{\sqrt{2}} & 0 & j \end{bmatrix}.$$

As can be seen, the power of the second and third spread components are amplified by a factor of 2 or equivalently, the power of the first spread component is reduced by factor of 2.

There might be phase adjustment blocks in example 300 as well, although not shown.

In example 300, the number of columns of the component spreading matrix 330 is equal to three, which corresponds to the number of components and the modulation size.

The output of the component spreading matrix 330 is then provided to the Symbol to RE mapping processing block 335. The example 300 may be used to generate a 8 point, 4 projection constellation. The number of rows indicates that the number of non-zero elements in the codebook is equal to two.

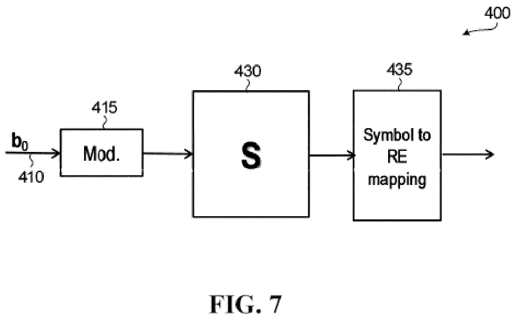

FIG. 7 is another non-claimed example 400 of a particular arrangement of signal processing operations derived from the framework for generating a MA signal. In example 400, individual bits $b_0$ are provided in a single stream 410 to a single modulator 415. This may for example be a BPSK modulator or a Quadrature Amplitude Modulation (QAM) modulator. A component output from modulator 415 is multiplied by component spreading matrix 430. The matrix being used to spread the components may be a conventional spreading sequence, for example a type used in CDMA. In linear spreading, there is only one component, so the spreading can be referred to as single component spreading, as discussed above. The output of the component spreading matrix 430 is then provided to the Symbol to RE mapping processing block 435.

The component spreading matrix 430 may be represented as a single-column matrix, i.e., a vector, or as a matrix having a fixed number of columns in which the spreading sequence is in the first column and zeros are in the remaining columns. The fixed number may be linked to the modulation size.

The component spreading matrix 430 may also be represented assuming BPSK modulation. In this case, the number of columns is linked to the modulation size and the columns of the component spreading matrix can be written as:

$$\mathbf{S'} = [\alpha_1 \mathbf{S} | \alpha_2 \mathbf{S} | ... | \alpha_r \mathbf{S}],$$

where S represents the spreading sequence and ($\alpha_1$, ... , $\alpha_r$) are scalar numbers used to generate the QAM symbol from the BPSK symbols and the value of subscript r is linked to the modulation size. In a particular embodiment, when the modulation is Quadrature Phase Shift Keying (QPSK), the component spreading matrix $\mathbf{S'}$ can be represented as a two-column matrix of [$\mathbf{S} | j\mathbf{S}$]

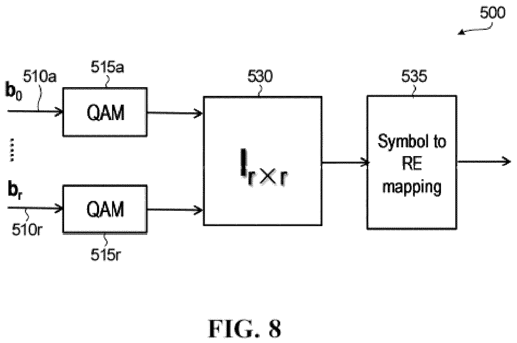

FIG. 8 is a further non-claimed example 500 of a particular arrangement of signal processing operations derived from the framework for generating a MA signal. In example 500, a stream of bits $b_0, ... b_r$ is divided into multiple sub-streams 510a, ..., 510r and each bit is provided to a separate modulator, which in FIG. 8 are QAM modulators 515a, ..., 515r. The components output from each of QAM modulators 515a, ..., 515r are multiplied by component spreading matrix 530. The particular matrix being used in example 500 to spread the components is an identity component spreading matrix, $I_{rXr}$. The output of the component spreading matrix 530 is then provided to the Symbol to RE mapping processing block 535.

In other embodiments, the component spreading matrix in example 500 can be represented based on assuming BPSK modulation. In this case, the component spreading matrix becomes a block diagonal matrix in the form of:

$$\begin{bmatrix} \alpha_1 & \cdots & 0 \\ \vdots & \ddots & \vdots \\ 0 & \cdots & \alpha_r \end{bmatrix}$$

where $(\alpha_1, ... , \alpha_r)$ are the corresponding vectors which can be used to generate the corresponding QAM symbols from the BPSK symbols.

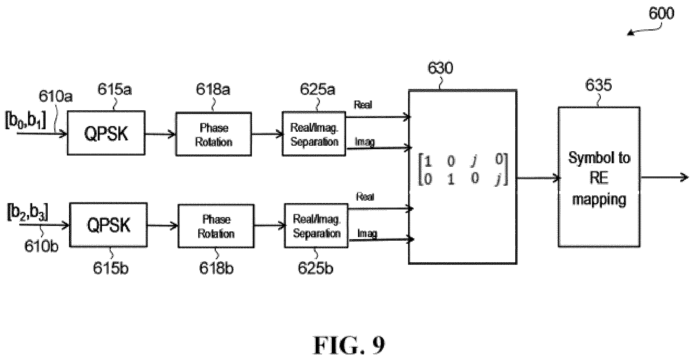

FIG. 9 is an example 600 of a particular arrangement of signal processing operations derived from the framework for generating a MA signal according to the claimed invention. In example 600, a set of bits $b_0, b_1, b_2, b_3$ is divided into two sub-streams 610a, 610b, and each pair of bits $b_0, b_1$ and $b_2, b_3$ is then provided to one of two separate modulators, which in FIG. 9 are QPSK modulators 615a, 615b. A component output from each of QPSK modulators 615a and 615b is provided to Phase Rotation processing blocks 618a and 618b, respectively. A component output from each of the Phase Rotation processing blocks 618a and 618b is provided to Real and Imaginary Separation processing blocks 625a and 625b, respectively. The real and imaginary portions of the component output from each of Real and Imaginary Separation processing blocks 625a and 625b are multiplied by component spreading matrix 630. The particular component spreading matrix 630 being used to spread the components is:

$$\begin{bmatrix} 1 & 0 & j & 0 \\ 0 & 1 & 0 & j \end{bmatrix}$$

The output of the component spreading matrix 630 is then provided to the Symbol to RE mapping processing block 635. The example 600 may be used to represent a 16 point constellation. If the phase rotation is chosen as 45 degrees, then a 16 point 9 projection constellation can be generated.

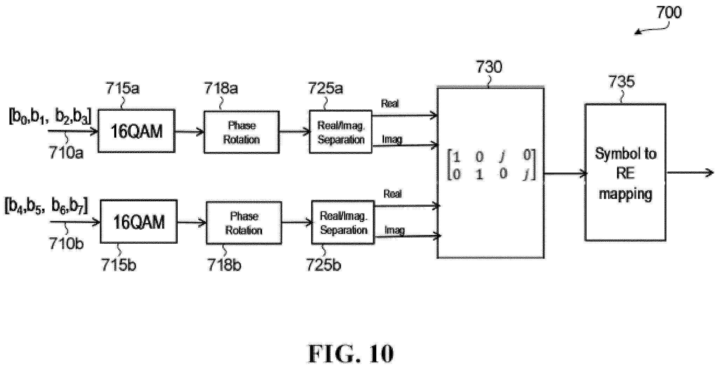

FIG. 10 is another non-claimed example 700 of a particular arrangement of signal processing operations derived from the framework for generating a MA signal. In example 700, a set of eight bits $b_0, b_1, b_2, b_3, b_4, b_5, b_6, b_7$ is divided into two sub-streams of four bits $b_0, b_1, b_2, b_3$ and $b_4, b_5, b_6, b_7$, which are each provided to one of two separate modulators, namely 16 point Quadrature Amplitude Modulation (16QAM) modulators 715a, 715b. A component output from each of 16QAM modulators 715a and 715b is provided to Phase Rotation processing blocks 718a and 718b, respectively. A component output from each of the Phase Rotation processing blocks 718a and 718b is provided to Real and Imaginary Separation processing blocks 725a and 725b, respectively. The real and imaginary portions of the component output from each of Real and Imaginary Separation processing blocks 725a and 725b are multiplied by component spreading matrix 730. The particular component spreading matrix 730 being used to spread the components is:

$$\begin{bmatrix} 1 & 0 & j & 0 \\ 0 & 1 & 0 & j \end{bmatrix}$$

The output of the component spreading matrix 730 is then provided to the Symbol to RE mapping processing block 735. The example 700 may be used to represent a 256 point constellation. If the phase rotation is chosen as 45 degrees, then a SCMA 256 point 49 projection codebook can be generated.

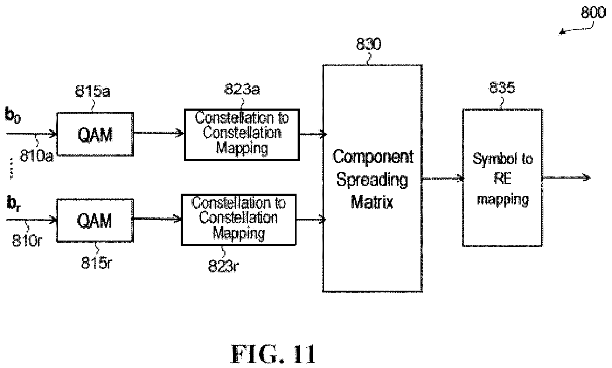

FIG. 11 is a yet another non-claimed example 800 of a particular arrangement of signal processing operations derived from the framework for generating a MA signal. In example 800, a stream of bits $b_0, ..., b_r$ is divided into multiple one bit sub-streams 810a, ..., 810r and each bit is provided to a separate modulator, which in example 800 are QAM modulators 815a, ..., 815r. A component output from each of QAM modulators 815a, ..., 815r is provided to a respective constellation to constellation mapping block 823a, ..., 823r. The components output from constellation to constellation block 823a, ..., 823r are multiplied by component spreading matrix 830. The output of the component spreading matrix 830 is then provided to the Symbol to RE mapping processing block 835. Each constellation to constellation mapping basically block maps a QAM symbol obtained from the first constellation to a second symbol obtained from the second constellation. In some implementations, the first and second constellations have a same number of points, but the points are labeled differently. This essentially becomes a constellation relabeling. In other implementations, the first and second constellations have a different number of points.

FIG. 12 illustrates a particular Gray labeling for a 16QAM constellation 900. The 16QAM constellation includes 16 points, each point defined by a set of four bits. FIG. 12 also includes two different constellation mappings 910 and 920 that have the same arrangement of the 16 points, but the labelling of the points is different. For example 912 and 922 are both labelled as 1100, but they occur at different locations of the respective constellations. In this particular example, the constellation re-mapping simply becomes constellation re-labeling.

FIG. 13 illustrates a particular Gray labeling for a 16QAM constellation 1000. The 16QAM constellation includes 16 points, each point defined by a four bit symbol value. Constellations 1010 and 1020 are examples of re-mapping to a reduced size constellation. Constellations 1010 and 1020 each include 9 points, each point defined by a four bit symbol value. Four of the constellation points of constellations 1010 and 1020 have a unique symbol value for the respective points as denoted by 1012a and 1012b, four of the constellation points have two symbol values associated with the respective points as denoted by 1014a and 1014b and one constellation point has four symbol values associated with that point as denoted by 1016. Constellations 1010 and 1020 have the same size of reduced point constellation, but the labelling is different for the two constellations. In some embodiments the re-mapping may result in different bit-to-symbol labeling for each component.

Using the proposed framework, MA schemes can be described by the component spreading matrix and the symbol to RE mapping or, in some embodiments, by the extended component spreading matrix introduced above. The various MA schemes can be configured based on an application scenario and required physical layer specifications, such as, but not limited to, spectral efficiency. Another parameter that can be specified includes the modulation vector. In implementations that can use the same modulator for different components, the modulation order used by the modulator can be implicitly obtained by the modulation and coding scheme (MCS) and the number of components. In some embodiments, the modulators can use BPSK or $\pi/2$-BPSK and the component spreading matrix (or extended component spreading matrix) can be defined based on that the particular modulation being used by the modulator.

In some embodiments, the component spreading matrix can also be UE-specific. In some embodiments, the symbol to RE mapping pattern used by the symbol to RE mapping pattern processing block could be UE-specific or layer-specific. In some embodiments, phase and/or amplitude adjustment can be determined based on one or more of a) an application scenario, b) physical layer requirements for the MA transmission, c) meeting key parameter indicators (KPI) and UE id and/or the layer index.

Described above are features that mainly correspond to transmitters and the generation of an MA signal. Non-claimed aspects of the disclosure also pertain to the receiving of MA signals and how those signals may be decoded.

Once a receiver knows the modulation and coding scheme (MCS), component spreading matrix, and the symbol to RE mapping and other pertinent signal processing methods used by a transmitter to generate the MA signal, the receiver can use this information to decode the signal. In some embodiments, the modulation size can be obtained from the component spreading matrix. In other embodiments, the component spreading matrix can be obtained or selected from the physical layer characteristic of the signal including, but not limited to, spectral efficiency, application type, quality of service (QoS) requirement, channel quality indicator (CQI) and signal to noise ratio (SNR) measurements. The transmitter may use one or more matrix selection parameters to select a matrix. In some embodiments, the matrix can be obtained from explicit signaling by the network. In some other embodiments, a pool of matrices can be generated in advance and communicated to the UE through physical layer and/or higher layer signaling in conjunction with a mapping rule between matrix indices and UE id, layer index and other matrix selection parameters including, but not limited to, spectral efficiency, application type, QoS requirement, CQI and SNR measurements. In some other embodiments, generating a pool of spreading matrices may include generating a plurality of spreading sequences to be used in construction of component spreading matrices. The knowledge of the component spreading matrix, and the symbol to RE mapping processing block and other pertinent signal processing methods used by a transmitter to generate the MA signal by the network side receiver could be either implicit or received through explicit signaling from the UE, or a combination thereof.

In some non-claimed embodiments, implicit knowledge may be based on a physical layer characteristic of the signal, such as the spectral efficiency of the transmitted signal, application type and QoS requirement. For example, there can be a one-to-one mapping between the spectral efficiency and the component spreading matrix.

In an UL situation in which a UE is transmitting to a network side receiver, the network side receiver may not know the component spreading matrix and the symbol to RE mapping and other pertinent signal processing methods that were used to generate the signal by the UE. In some embodiments, the component spreading matrix and/or the symbol to RE mapping and other pertinent signal processing methods used by a transmitter to generate the MA signal may be mapped to the UE id and/or layer index. In this case, if the network side receiver has knowledge of the UE index of the UE, this knowledge can be used to determine the component spreading matrix and symbol to RE mapping, for example by reducing the search space of potential component spreading matrices and symbol to RE mappings.

Blind detection by the receiver may also be possible, if there are sufficiently few potential component spreading matrices and symbol to RE mappings.

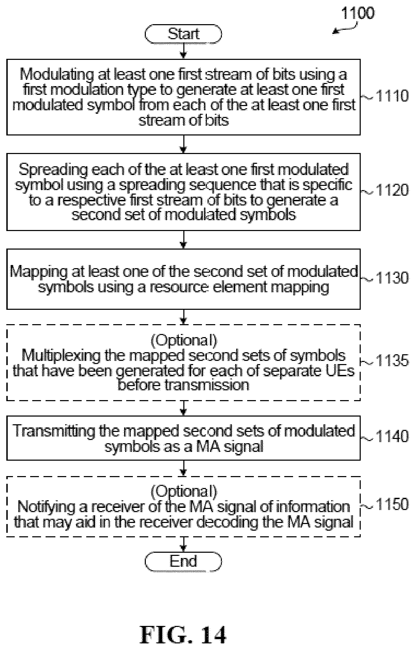

FIG. 14 is a flowchart 1100 that illustrates an example method for transmission of a MA signal useful for understanding the invention. The steps of the method may be performed by a network side device that is transmitting to one or more UEs or by one or more UEs that are transmitting to a network side receiver.

Step 1110 involves the transmitting device modulating at least one first stream of bits using a first modulation type to generate at least one first modulated symbol from each of the at least one first stream of bits. Each first stream of bits includes at least one bit.

Step 1120 involves the transmitting device spreading each of the at least one first modulated symbol using a spreading sequence that is specific to a respective first stream of bits to generate a second set of modulated symbols.

Step 1130 involves the transmitting device mapping at least one of the second set of modulated symbols using a resource element mapping to generate the MA signal.

An optional step 1135 that may be performed, in particular for a DL scenario when a network side device is transmitting a signal to more than one UE, or in uplink when more than one signal layer is transmitted, involves the network side device multiplexing the mapped second sets of modulated symbols that have been generated for each of the separate UEs or layers before transmission.

Step 1140 involves the transmitting device transmitting the mapped second sets of modulated symbols as a MA signal.

A further optional step 1150 may include the transmitting device notifying a receiver of the MA signal of information that may aid in the receiver decoding the MA signal. This may include notifying the receiver of one or more of a modulation type, a component-specific spreading sequence and a symbol to resource element map for decoding the MA signal.

The example method 1100 is intended for illustrative purposes. Steps that are identified in FIG. 14 as optional in the flow chart above may or may not be performed in a given implementation of the method. Other embodiments could involve performing the illustrated operations in any of various ways, performing fewer or additional operations, and/or varying the order in which operations are performed. Other variations could be or become apparent to a skilled person based on the present disclosure.

Although the UE may be responsible for selecting the signal processing operations, the UE may receive information from the network side receiver and select signal processing operations based on the received information. Also, in some embodiments, the signal processing operations to be used for each UE are predefined and/or preconfigured based on UE id. It makes sense for the UE to be responsible for selecting the signal operations as the UE may be capable of processing only certain types of signals. The network side receiver may propose or assign different selections of signal processing operations for different UEs based in the receiver's knowledge of the UEs.

In a UL scenario, the UEs may also signal the network side receiver to inform the network side receiver of the type of MA signal being used, i.e. the types of signal processing operations used to generate the signal by the UE.

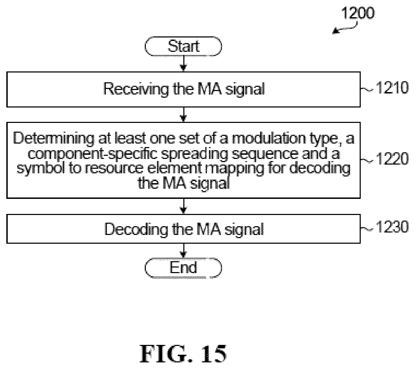

FIG. 15 is a flowchart 1200 that illustrates a non-claimed example method for decoding a MA signal. The steps of the method may be performed by a network side device that is receiving an MA signal from one or more UEs or by one or more UEs that are receiving from a network side transmitter.

Step 1210 involves the receiving device receiving the MA signal.

Step 1220 involves the receiving device determining at least one set of variables including a modulation type, a component-specific spreading sequence, and a symbol to resource element mapping and other pertinent signal processing methods that was used to generate the signal by the UE for decoding the MA signal. In some embodiments, this determination may be based on UE id, blind detection or on signaling received from the UE, or a combination thereof.

Step 1230 involves the receiving device decoding the MA signal.

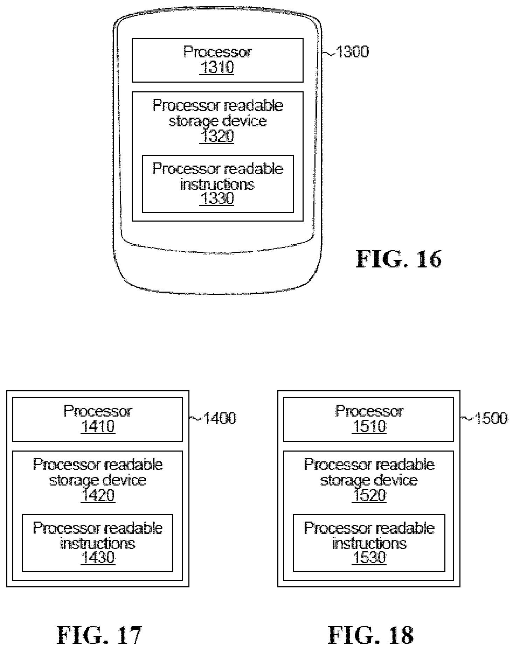

FIG. 16 is a block diagram of an example apparatus 1300 for transmission of a MA signal. The example apparatus 1300 may be a UE and thus have various elements that would normally be a part of such an apparatus, such as a key pad, display screen, speaker, microphone, etc. The example apparatus 1300 includes a processor 1310 and a processor readable storage device 1320. The processor readable storage device 1320 has stored thereon processor executable instructions 1330 that when executed by the processor 1310 cause the processor 1310 to perform a method consistent with the methods described above.

FIG. 17 is a block diagram of an example network side apparatus 1400 for transmission of a MA signal. Such a network side apparatus may include physical structure for performing other network side tasks and be located anywhere within the network that allows the device to operate accordingly. The example apparatus 1400 includes a processor 1410 and a processor readable storage device 1420. The processor readable storage device 1420 has stored thereon processor executable instructions 1430 that when executed by the processor 1410 cause the processor 1410 to perform a method consistent with the methods described above.

FIG. 18 is a block diagram of an example apparatus 1500 for receiving a MA signal. The example apparatus may be a network side device capable of receiving and decoding the MA signal. Such a network side apparatus may include physical structure for performing other network side tasks and be located anywhere within the network that allows the device to operate accordingly. The example apparatus 1500 includes a processor 1510 and a processor readable storage device 1520. The processor readable storage device 1520 has stored thereon processor executable instructions 1530 that when executed by the processor 1510 cause the processor 1510 to implement a method for receiving one or more MA signals form one or more transmitters and decode the one or more MA signals.

In some embodiments, the processor in FIGs. 16, 17 and 18 may be a component of a general-purpose computer hardware platform. In other embodiments, the processor may be a component of a special-purpose hardware platform. For example, the processor may be an embedded processor, and the instructions may be provided as firmware. Some embodiments may be implemented by using hardware only. In some embodiments, the instructions for execution by a processor may be embodied in the form of a software product. The software product may be stored in a non-volatile or non-transitory storage medium, which can be, for example, a compact disc read-only memory (CD-ROM), universal serial bus (USB) flash disk, or a removable hard disk.

Some embodiments of the disclosure may allow selection of appropriate MA schemes for particular application scenarios, depending on a required key performance indicator (KPI) based on the defined processing operators.

## Claims

1. A method for a transmission of a multiple access, MA, signal performed by a transmitting device comprising a processor and a computer readable storage media having stored thereon computer executable instructions, that, when being executed by the processor, let the processor perform the following method steps:

   • modulating (1110) first two bits of a bit stream (410) with a first modulation type, being Quadrature Phase Shift Keying, QPSK, thereby arriving at a first modulated symbol, being a first QPSK symbol, and modulating (1110) second two bits different to the first two bits of the bit stream (410) with the first modulation type, thereby arriving at a second modulated symbol, being a second QPSK symbol; **characterized in that** the method further comprises the steps:

   • separating the first modulated symbol and the second modulated symbol into its real parts and imaginary parts;
   • spreading (1120) the first modulated symbol and the second modulated symbol by using a spreading matrix, wherein the spreading is performed as a multiplication of a column vector with the spreading matrix, wherein the column vector consists of four vector elements, the four vector elements being the real part of the first modulated symbol, the imaginary part of the first modulated symbol, the real part of the second modulated symbol, and the imaginary part of the second modulated symbol, wherein the spreading matrix is defined as:

$$\begin{bmatrix} 1 & 0 & j & 0 \\ 0 & 1 & 0 & j \end{bmatrix}$$

   wherein a result of the spreading is a column vector formed of Quadrature Amplitude Modulation, QAM, symbols,
   • mapping (1130) all QAM symbols using a resource element mapping;
   • transmitting (1140) the mapped QAM symbols as the MA signal.

2. The method of claim 1, further comprising adjusting a phase or a power, or both, of at least one of the first and second modulated symbol.

3. The method of any one of claims 1 - 2, wherein the mapping comprises using a user equipment, UE, specific resource mapping.

4. A transmitting device configured to transmit a multiple access, MA, signal, the transmitting device comprising:

   • a processor; and
   • computer readable storage media having stored thereon computer executable instructions, that, when being executed by the processor, let the processor perform the method according to any one of claims 1 to 3.

5. A computer readable storage media having stored thereon computer executable instructions, that, when executed by a processor, let the processor perform the method according to any one of claims 1 to 3.

## Patentansprüche

1. Verfahren für eine Übertragung eines Mehrfachzugangs-(MA-)Signals, das von einer Übertragungsvorrichtung durchgeführt wird, die einen Prozessor und ein computerlesbares Speichermedium umfasst, auf dem computerausführbare Anweisungen gespeichert sind, die, wenn sie von dem Prozessor ausgeführt werden, den Prozessor die folgenden Verfahrensschritte durchführen lassen:

   • Modulieren (1110) von ersten zwei Bits eines Bitstroms (410) mit einer ersten Modulationsart, die eine Quadraturphasenumtastung (QPSK) ist, wodurch bei einem ersten modulierten Symbol angelangt wird, das ein erstes QPSK-Symbol ist, und Modulieren (1110) von zweiten zwei Bits, die sich von den ersten zwei Bits des Bitstroms (410) unterscheiden, mit der ersten Modulationsart, wodurch bei einem zweiten modulierten Symbol angelangt wird, das ein zweites QPSK-Symbol ist; **dadurch gekennzeichnet, dass** das Verfahren ferner die folgenden Schritte umfasst:

• Trennen des ersten modulierten Symbols und des zweiten modulierten Symbols in ihre Realteile und Imaginärteile;
• Spreizen (1120) des ersten modulierten Symbols und des zweiten modulierten Symbols durch Verwenden einer Spreizmatrix, wobei das Spreizen als eine Multiplikation eines Spaltenvektors mit der Spreizmatrix durchgeführt wird, wobei der Spaltenvektor aus vier Vektorelementen besteht, wobei die vier Vektorelemente der Realteil des ersten modulierten Symbols, der Imaginärteil des ersten modulierten Symbols, der Realteil des zweiten modulierten Symbols und der Imaginärteil des zweiten modulierten Symbols sind, wobei die Spreizmatrix als Folgendes definiert ist:

$$\begin{bmatrix} 1 & 0 & j & 0 \\ 0 & 1 & 0 & j \end{bmatrix}$$

wobei ein Ergebnis des Spreizens ein Spaltenvektor ist, der aus Quadraturamplitudenmodulations-(QAM-)Symbolen gebildet ist,
• Zuordnen (1130) aller QAM-Symbole durch Verwenden eines Ressourcenelementzuordnens;
• Übertragen (1140) der zugeordneten QAM-Symbole als das MA-Signal.

**2.** Verfahren nach Anspruch 1, ferner umfassend ein Anpassen einer Phase oder einer Leistung oder beider von mindestens einem des ersten und zweiten modulierten Symbols.

**3.** Verfahren nach einem der Ansprüche 1 bis 2, wobei das Zuordnen ein Verwenden eines benutzergerät-(UE-)spezifischen Ressourcenzuordnens umfasst.

**4.** Übertragungsvorrichtung, die konfiguriert ist, um ein Mehrfachzugangs-(MA-)Signal zu übertragen, wobei die Übertragungsvorrichtung Folgendes umfasst:

• einen Prozessor; und
• computerlesbares Speichermedium, auf dem computerausführbare Anweisungen gespeichert sind, die, wenn sie von dem Prozessor ausgeführt werden, den Prozessor das Verfahren nach einem der Ansprüche 1 bis 3 durchführen lassen.

**5.** Computerlesbares Speichermedium, auf dem computerausführbare Anweisungen gespeichert sind, die, wenn sie von einem Prozessor ausgeführt werden, den Prozessor das Verfahren nach einem der Ansprüche 1 bis 3 durchführen lassen.

**Revendications**

**1.** Procédé d'une transmission d'un signal d'accès multiple, MA, réalisé par un dispositif de transmission comprenant un processeur et un support de stockage lisible par ordinateur sur lequel sont stockées des instructions exécutables par ordinateur, qui, lorsqu'elles sont exécutées par le processeur, permettent au processeur de réaliser les étapes de procédé suivantes :

• la modulation (1110) de deux premiers bits d'un flux binaire (410) avec un premier type de modulation, étant la modulation par déplacement de phase en quadrature, QPSK, arrivant ainsi à un premier symbole modulé, étant un premier symbole QPSK, et la modulation (1110) de deux seconds bits différents des deux premiers bits du flux binaire (410) avec le premier type de modulation, arrivant ainsi à un second symbole modulé, étant un second symbole QPSK ; **caractérisé en ce que** le procédé comprend également les étapes suivantes :

• la séparation du premier symbole modulé et du second symbole modulé en ses parties réelles et parties imaginaires ;
• l'étalement (1120) du premier et du second symbole modulé en utilisant une matrice d'étalement, dans lequel l'étalement est réalisé comme multiplication d'un vecteur colonne par la matrice d'étalement, dans lequel le vecteur colonne est constitué de quatre éléments vectoriels, les quatre éléments vectoriels étant la première partie réelle du premier symbole modulé, la partie imaginaire du premier symbole modulé, la partie réelle du second symbole modulé, et la partie imaginaire du second symbole modulé, dans lequel la matrice d'étalement est définie comme suit :

$$\begin{bmatrix} 1 & 0 & j & 0 \\ 0 & 1 & 0 & j \end{bmatrix}$$

dans lequel un résultat de l'étalement est un vecteur colonne formé de symboles de modulation d'amplitude en quadrature, QAM,
• le mappage (1130) de tous les symboles QAM à l'aide d'un mappage d'éléments de ressources ;
• la transmission (1140) des symboles QAM mappés en tant que signal MA.

2. Procédé selon la revendication 1, comprenant également le réglage d'une phase ou d'une puissance, ou des deux, d'au moins l'un du premier et second symbole modulé.

3. Procédé selon l'une quelconque des revendications 1 et 2, dans lequel le mappage comprend l'utilisation d'un mappage de ressources spécifique à un équipement utilisateur, UE.

4. Dispositif de transmission configuré pour transmettre un signal d'accès multiple, MA, le dispositif de transmission comprenant :

   • un processeur ; et
   • un support lisible par ordinateur sur lequel sont stockées des instructions exécutables par ordinateur, qui, lorsqu'elles sont exécutées par le processeur, permettent au processeur de réaliser le procédé selon l'une quelconque des revendications 1 à 3.

5. Support lisible par ordinateur sur lequel sont stockées des instructions exécutables par ordinateur, qui lorsqu'elles sont exécutées par un processeur, permettent au processeur de réaliser le procédé selon l'une quelconque des revendications 1 à 3.

FIG. 1

**FIG. 2A**

**FIG. 2B**

10

Bit level operations
12

Symbol level operations
14

FEC
20

Bit level
Interleaver/Scrambler
22

Modulated symbol
sequence generator
24

Symbol to RE
mapper
26

**FIG. 3**

FIG. 4A

**FIG. 4B**

EP 3 507 913 B1

FIG. 5

FIG. 6

FIG. 7

**FIG. 8**

**FIG. 9**

700

730    735

715a    718a    725a

$[b_0,b_1, b_2,b_3]$
710a
16QAM → Phase Rotation → Real/Imag. Separation

Real
Imag

$\begin{bmatrix} 1 & 0 & j & 0 \\ 0 & 1 & 0 & j \end{bmatrix}$

Symbol to RE mapping

$[b_4,b_5, b_6,b_7]$
710b
16QAM → Phase Rotation → Real/Imag. Separation

Real
Imag

715b    718b    725b

**FIG. 10**

FIG. 11

FIG. 12

FIG. 13

1100

```
                        ( Start )
                            │
                            ▼
┌──────────────────────────────────────────┐
│ Modulating at least one first stream of   │
│ bits using a first modulation type to     │ ~1110
│ generate at least one first modulated     │
│ symbol from each of the at least one      │
│ first stream of bits                      │
└──────────────────────────────────────────┘
                            │
                            ▼
┌──────────────────────────────────────────┐
│ Spreading each of the at least one first  │
│ modulated symbol using a spreading        │ ~1120
│ sequence that is specific to a respective │
│ first stream of bits to generate a second │
│ set of modulated symbols                  │
└──────────────────────────────────────────┘
                            │
                            ▼
┌──────────────────────────────────────────┐
│ Mapping at least one of the second set of │ ~1130
│ modulated symbols using a resource        │
│ element mapping                           │
└──────────────────────────────────────────┘
                            │
                            ▼
┌ ─ ─ ─ ─ ─ ─ ─ ─ ─ ─ ─ ─ ─ ─ ─ ─ ─ ─ ─ ─ ┐
│             (Optional)                    │
│ Multiplexing the mapped second sets of    │ ~1135
│ symbols that have been generated for each │
│ of separate UEs before transmission       │
└ ─ ─ ─ ─ ─ ─ ─ ─ ─ ─ ─ ─ ─ ─ ─ ─ ─ ─ ─ ─ ┘
                            │
                            ▼
┌──────────────────────────────────────────┐
│ Transmitting the mapped second sets of    │ ~1140
│ modulated symbols as a MA signal          │
└──────────────────────────────────────────┘
                            │
                            ▼
┌ ─ ─ ─ ─ ─ ─ ─ ─ ─ ─ ─ ─ ─ ─ ─ ─ ─ ─ ─ ─ ┐
│             (Optional)                    │
│ Notifying a receiver of the MA signal of  │ ~1150
│ information that may aid in the receiver   │
│ decoding the MA signal                    │
└ ─ ─ ─ ─ ─ ─ ─ ─ ─ ─ ─ ─ ─ ─ ─ ─ ─ ─ ─ ─ ┘
                            │
                            ▼
                        ( End )
```

# FIG. 14

1200

```
        ┌─────────┐
        │  Start  │
        └─────────┘
             │
             ▼
┌──────────────────────────────────────┐
│      Receiving the MA signal         │~ 1210
└──────────────────────────────────────┘
             │
             ▼
┌──────────────────────────────────────┐
│ Determining at least one set of a    │
│ modulation type, a                   │
│ component-specific spreading         │~ 1220
│ sequence and a symbol to resource    │
│ element mapping for decoding         │
│ the MA signal                        │
└──────────────────────────────────────┘
             │
             ▼
┌──────────────────────────────────────┐
│      Decoding the MA signal          │~ 1230
└──────────────────────────────────────┘
             │
             ▼
        ┌─────────┐
        │   End   │
        └─────────┘
```

## FIG. 15

Processor
1310

Processor readable
storage device
1320

Processor readable
instructions
1330

~1300

**FIG. 16**

Processor
1410

Processor readable
storage device
1420

Processor readable
instructions
1430

~1400

Processor
1510

Processor readable
storage device
1520

Processor readable
instructions
1530

~1500

**FIG. 17**

**FIG. 18**

**REFERENCES CITED IN THE DESCRIPTION**

**Patent documents cited in the description**

- US 20090022234 A1